# EUROPEAN PATENT APPLICATION

(11) **EP 4 728 846 A1**
(43) Date of publication of application: **22.04.2026**
(21) Application number: 25200575.6
(22) Date of filing: 05.09.2025
(51) Int. Cl.: A01C 7/20

(54) **SUSPENSION SYSTEM, SYSTEM FOR A PLANTING MACHINE AND METHOD WITH SUCH**

(30) Priority: 16.10.2024 US 202418917736
(71) Applicant: Deere & Company, Moline, IL 61265 (US)
(72) Inventor: Soto Lozano, Carlos Alberto, Mannheim (DE); Wackerle, Bradley A., Mannheim (DE); Kinney, Colter W., Mannheim (DE)
(74) Representative: Reichert, Christian

(57) **Abstract**

A suspension system (201) for a planting machine is disclosed. The suspension system (201) comprising: an actuator (60) configured to be couplable to a rigid frame; an upper linkage assembly (209) rotatably coupled to the actuator (60) and comprising a plurality of arms and a bracket; and an arm assembly (211) comprising a plurality of arms rotatably coupled to the upper linkage assembly (209) and the actuator (60) and a shank arm (214) rotatably coupled to the plurality of arms, wherein shank arm (214) is configured to be rotatably couplable to a row unit (10) and bracket is configured to be rigidly couplable to the rigid frame, wherein the upper linkage assembly (209) is configured to distribute forces between the upper linkage assembly (209) and the arm assembly, and wherein the upper linkage assembly (209) is configured to distribute a force over a greater rotational range than the arm assembly. Further, a system for a planting machine comprising such suspension (201) system and a method for adjusting downforce of such suspension system (201) is disclosed.

## Description

The present disclosure relates to a linkage assembly, and more particularly to a linkage assembly that allows for ground following of a corresponding row unit.

### Background of the Disclosure

Various factors affect crop yields. One factor, for example, is seed depth in a furrow. Another factor is soil compaction along the furrow. Various factors affect the seed depth in a furrow such as down force through the row unit.

### Summary

The present disclosure may include one or more of the following aspects and/or combinations thereof. Some examples include a suspension system for a planting machine. In some examples, the system includes an actuator configured to be couplable to a rigid frame. In some examples the system includes an upper linkage assembly rotatably coupled to the actuator and including a plurality of arms and a bracket. In some examples the system includes an arm assembly including a plurality of arms rotatably coupled to the upper linkage assembly and the actuator and a shank arm rotatably coupled to the plurality of arms. In some examples the shank arm is configured to be rotatably couplable to a row unit and bracket is configured to be rigidly couplable to the rigid frame. In some examples the upper linkage assembly is configured to distribute forces between the upper linkage assembly and the arm assembly. In some examples, the upper linkage assembly is configured to distribute a force over a greater rotational range than the arm assembly.

In some examples, the upper linkage assembly is a four-bar linkage.

In some examples, the arm assembly is a four-bar linkage.

In some examples, the arm assembly and the upper linkage assembly include two interconnected four-bar linkages.

In some examples, the system is configured to cause a distance between at least a portion of the bracket and one or more other linkages of the upper linkage assembly to increase and decrease proportionally with a distance between the bracket and the shank arm.

In some examples, the actuator is an electro-hydraulic cylinder.

In some examples, the row unit is a seeding row unit.

In some examples, the seeding row unit is an air seeding row unit.

In some examples, the planting machine row unit further includes one or more ground openers including a tension system, wherein the upper linkage assembly, and the arm assembly are configured to regulate a distributed force in the tension system of the one or more ground openers.

In some examples, the upper linkage assembly and the arm assembly is configured to be couplable to a uniform row unit toolbar.

Some examples include a system for a planting machine. The system includes a row unit toolbar. In some examples the system includes one or more row units. In some examples the system includes one or more suspension systems coupled to and extending between the row unit toolbar and the one or more planting machine components. In some examples the system includes the one or more suspension systems includes an actuator coupled to the row unit toolbar to a rigid frame. In some examples the system includes an upper linkage assembly including a plurality of arms rotatably coupled to the actuator and a bracket. In some examples the system includes an arm assembly that includes a plurality of arms rotatably coupled to the upper linkage assembly and the actuator and a shank arm rotatably coupled to the plurality of arms. In some examples the system includes the shank arm is rotatably coupled to the row unit and the bracket is coupled to the row unit toolbar. In some examples the upper linkage assembly is configured to distribute forces between the upper linkage assembly and the arm assembly. In some examples the upper linkage assembly is configured to distribute a force over a greater rotational range than the arm assembly.

In some examples the system includes one or more of the upper linkage assembly and the arm assembly is a four-bar linkage.

In some examples the bracket is rigidly coupled to the toolbar.

In some examples the system is configured to cause a distance between at least a portion of the bracket and one or more other linkages of the upper linkage assembly to increase and decrease proportionally with a distance between the shank arm and the bracket.

In some examples the actuator is an electro-hydraulic cylinder.

In some examples the one or more row units is a seeding row unit.

In some examples, the one or more row units is an air seeding row unit.

In some examples the seeding row unit further includes one or more ground openers including a tension system, wherein the upper linkage assembly, and the arm assembly are configured to regulate a distributed force in the tension system of the one or more ground openers.

In some examples the system includes a pressure controller communicatively coupled to the actuator and the tension system, and wherein the pressure controller is configured to coordinate pressure in the actuator and the tension system.

Some examples include a method for adjusting the downforce of a planting machine row unit suspension system. In some examples the method includes providing instructions to an actuator to provide a desired force. In some examples the method includes receiving a downforce reading from one or more downforce sensors. In some examples the method includes providing a signal to the actuator to provide a predetermined downforce based at least in part on the downforce reading. In some examples the force from the actuator is provided through a linkage assembly and the downforce is measured from a portion of the linkage assembly. In some examples, the linkage assembly is configured to distribute forces between the upper linkage assembly and the arm assembly.

### Brief Description of the Drawings

FIG. 1 is a schematic side view of a row unit coupled to a planter assembly and work machine.
FIG. 2A is a perspective view of the row unit coupled to a row unit suspension system.
FIG. 2B is a left side elevation view of the row unit coupled to a row unit suspension system.
Fig. 3 is a left side elevation view of the row unit suspension system.
FIG. 4 is a perspective view of a portion of the row unit suspension system.
FIG. 5 is a flow chart showing example steps for adjusting the downforce of a planting machine row unit suspension system.

### Detailed Description

An agricultural machine such as an agricultural seeder may include a plurality of row units that may distribute seeds during a planting operation. In some examples, the row unit includes an actuator that produces downforce for purposes such as soil compaction and uniform planting depth. In some examples the actuator is configured to act through a linkage that supports dampening of ground forces acting through row unit along a surface. In the examples where the row unit travels along various depths of surfaces, the actuator may produce various forces along the travel of the row unit due to various force distributions in the linkage. Such downforce variation may produce uneven force distribution and uneven planting depth. As such, there is a need for a linkage that promotes even planting depth throughout the travel of the row unit.

Aspects described in this disclosure include a suspension system for a planting system that includes a linkage assembly that forms two four-bar linkages interconnected such that each of the four-bar linkages connects to a downforce actuator, one of the linkages connects to a planting system bar that is coupled to a plurality of row units, and the other of the linkages is coupled to both the row planting system bar and the row unit. The examples of the present disclosure described below are not exhaustive and do not limit the disclosure to the precise forms in the following detailed description. Rather, the examples are chosen and described so that others skilled in the art may appreciate and understand the principles and practices of the present disclosure.

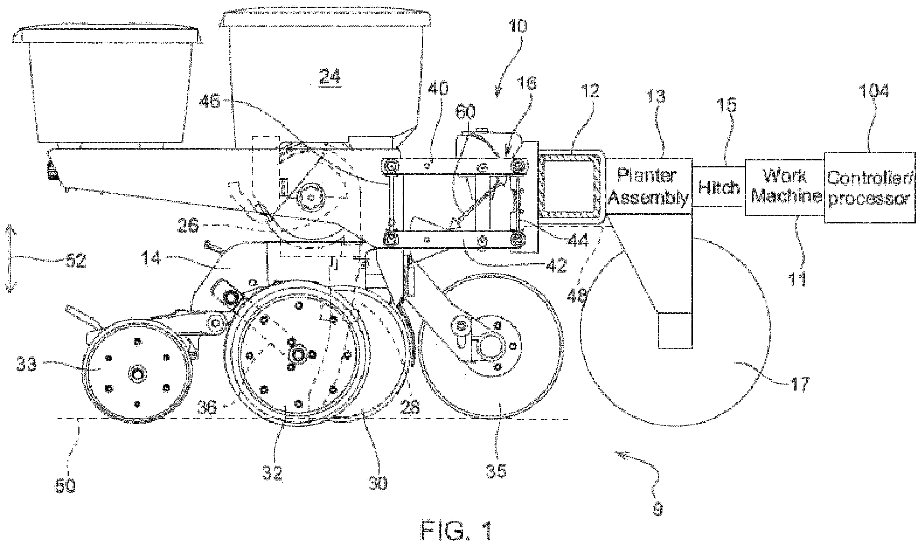

Fig. 1 illustrates a planter row unit 10 mounted to a transversely extending toolbar 12 of a planter assembly 13. The planter assembly 13 may have a plurality of row units 10 mounted across the width of the toolbar 12. The planter assembly 13 may have multiple toolbars spaced from one another to provide a spaced configuration having row units 10 positioned across both a forward toolbar and a rearward toolbar. The planter assembly 13 may be coupled to a work machine 11 through a hitch 15 and have one or more wheels 17 positioned to substantially carry the weight of the planter assembly 13. The work machine 11 may be any known work machine 11 such as a tractor. The work machine 11 may have a power unit such as a gas, diesel, electric motor or a hybrid combination thereof that selectively distributes torque to move one or more wheels and/or track assemblies. The hitch 15 may provide a location to couple the planter assembly 13 to a frame of the work machine 11 so the work machine 11 can selectively pull the planter assembly 13 along the underlying surface. The hitch 15 may have a single or multi-point coupling configuration. In an alternative example, the row unit 10 may be coupled directly to a toolbar of the work machine 11 without requiring a hitch 15. For example, the row unit may be 10 may be rigidly coupled to a toolbar using one or more fasteners.

Each example of a row unit discussed herein may be coupled to a work machine in any of the configurations discussed herein. Accordingly, this disclosure will primarily illustrate and describe a single row unit configuration. However, this disclosure contemplates applying the disclosed examples discussed herein across a toolbar wherein there may be multiple row units having a substantially similar design as the described example across the toolbar and possibly on forward or rearward toolbars along the assembly.

The row unit 10 is provided with a central frame member 14 coupled to the toolbar 12, which may be a rigid frame, by a linkage assembly 16 to enable vertical relative movement between the row unit and the toolbar 12. In the example shown in FIG. 1, the linkage assembly 16 is a parallelogram linkage assembly. Seed is stored in seed hopper 24 and provided to a seed meter 26. The seed meter singulates seed from a seed pool and drops the individual seeds through a seed tube 28 into a planting furrow. The row unit 10 may include a tension system 9. The tension system 9 may include a disk furrow opener to form a furrow in a soil. The furrow is formed in the soil by the disk furrow opener (e.g., ground opener) having at least one disk 30. Gauge wheels 32 control the depth of the furrow and are mounted to the frame member 14 by pivot arms 36. There is a gauge wheel adjacent the outer side of the opener disk 30. A closing wheel 33 is coupled to the frame member 14 and configured to close the furrow opened by the disk 30 after a seed or other commodity is placed therein. Optionally, one or more of a row cleaner or a coulter 35 may be coupled to the frame member 14 to be oriented along a leading portion of the row unit 10 to clear debris from the path of the opener disk 30 in use to ensure the opener disk 30 does not contact debris that prevents a furrow from being formed with the opener disk 30. However, in some examples contemplated herein there may be no row cleaner or coulter 35 at all.

The linkage assembly 16 shown in FIG. 1 has an upper link 40 and a lower link 42. Both the upper link 40 and the lower link 42 are pivotally coupled to the toolbar 12 on one end and to the frame member 14 and the row unit 10 on the other end. In the linkage assembly 16, the upper and lower links 40, 42 may be pivotally coupled to the toolbar 12 at a toolbar pivot distance 44 on one end and the upper and lower links 40, 42 may be pivotally coupled to the frame member 14 of the row unit 10 at a row unit pivot distance 46 at the other end. In the row unit 10, the toolbar pivot distance 44 and the row unit pivot distance 46 are substantially the same such that the upper link 40 and lower link 42 remain substantially parallel to one another as the row unit 10 moves relative to the toolbar 12.

In this arrangement, the toolbar 12 may be oriented along a planter plane 48 that is substantially controlled by the position of planter assembly 13 along an underlying surface relative to the work machine 11. More specifically, the one or more wheel 17 may contact the underlying surface to space the toolbar 12 of the planter assembly 13 from the underlying surface along the planter plane 48. In one aspect of this disclosure, the planter plane 48 may be controlled, in part, by the location of the work machine 11 relative to the at least one wheel 17. For example, the at least one wheel 17 may be a pivot point for the planter assembly 13 about which the planter plane 48 may rotate depending on the location of the work machine 11 relative to the at least one wheel 17. In one example, as the work machine 11 enters an uphill feature in the underlying surface the planter plane 48 may transition from the substantially horizontal configuration of Fig. 1 to an angled configuration relative to a level horizontal plane. Similarly, the row unit 10 may be oriented along a row unit plane 50 defined by the frame member 14. The row unit plane 50 is the plane defined along a surface of the gauge wheel 32 and closing wheel 33 that are positioned to contact the underlying surface when properly positioned thereon during a planting operation. Ideally, the row unit plane 50 is substantially aligned with a plane of the underlying surface directly underneath the row unit 10 so the row unit 10 can distribute seed or other commodity in a furrow having a predictable depth and any remaining components of the row unit 10, such as a row cleaner or closing wheel, may be properly positioned along the underlying surface to executed their intended function.

In the planter assembly 13, the linkage assembly 16 provides parallel upper and lower links 40, 42 that have substantially equally spaced pivot distances 44, 46 on the row unit 10 frame member 14 and the toolbar 12. In this configuration, the row unit plane 50 remains substantially parallel to the planter plane 48 as the row unit 10 moves relative to the toolbar 12. More specifically, the linkage assembly 16 allows the row unit plane 50 to remain substantially parallel to the planter plane 48 as the row unit 10 travels in a substantially perpendicular direction 52 relative to the planter plane 48 as the row unit 10 encounters undulations or other non-planar changes to the underlying surface. The parallelogram linkage assembly 16 of the row unit 10 provides for movement in the perpendicular direction 52 of the row unit 10 but substantially maintains the row unit plane 50 in a parallel orientation with the planter plane 48. In this configuration, as the planter assembly 13 travels over hills or valleys, the work machine 11 and wheel 17 become oriented along a portion of the hill or valley that is not planar with the portion of the hill or valley adjacent to the row unit 10. However, because the linkage assembly 16 is a parallelogram, some or all of the row unit 10 may not remain in a desired alignment with the underlying surface.

In one aspect of this disclosure, the linkage assembly 16 has a downforce actuator 60 that applies a spring force on the linkage assembly 16 to bias the row unit 10 towards the underlying surface. The downforce actuator 60 may extend from the toolbar on one end to a pivotal component of the linkage assembly 16 to apply the downforce to the row unit 10. In some examples, the actuator 60, includes an actuator connector 19, that is provided to couple the actuator, to one or more other components of the planter assembly 13. The downforce actuator 60 may be a hydraulic actuator with an accumulator or the like, a pneumatic system providing a pressurized fluid to an actuator, an electromechanical cylinder such as an electro-hydraulic cylinder actuator, a mechanical system having one or more spring, or any other known system that can apply a spring force to the linkage assembly 16 to bias the row unit 10 towards the underlying surface.

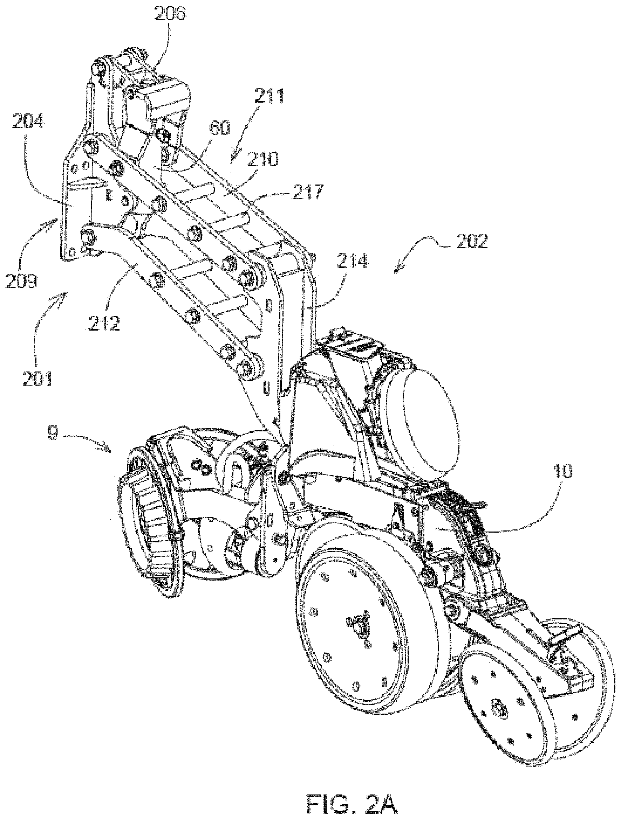

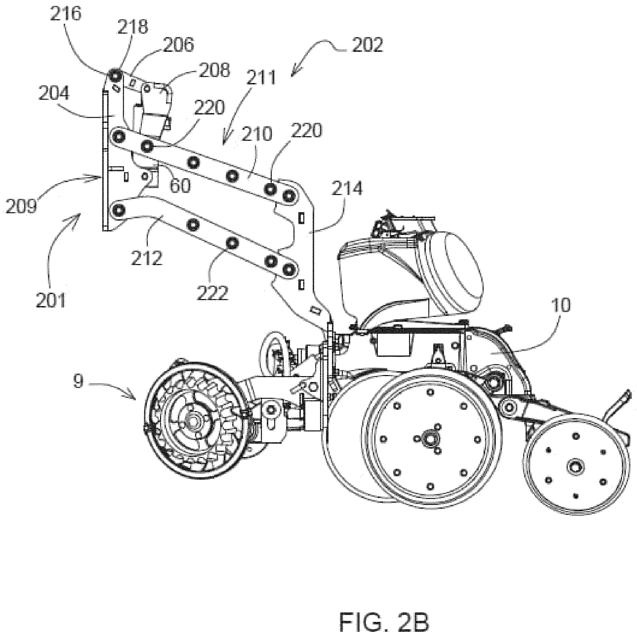

FIGS. 2A-2B include a row unit 10 coupled to a row unit suspension system 201 that includes a linkage assembly 202. The linkage assembly 202 provides a force distribution assembly that distributes actuator forces from the actuator 60 to at least a portion of a rotational range of the assembly. The linkage assembly 202 promotes even force distribution throughout the compression and extension of the actuator 60. For example, the linkage assembly may promote even force distribution of the actuator 60 as the row unit 10 coupled through the linkage assembly travels to contour to the ground. The linkage assembly 202 is provided to convert rotational motion into various other forms of motion that may distribute the forces from the actuator 60 more evenly through the travel of the row unit 10. As such, the linkage assembly 202 may include one or more four-bar linkages, that may produce linear, oscillatory, and/or complex curvilinear motions.

In some examples, such as the example shown in FIGS 2A-2B, the linkage assembly 202 forms two interconnected four-bar linkages configured to extend from the row unit 10 to one or more of implements such as the work machine 11 or the tool bar 12. The linkage assembly 202 includes two sets of four arms connected in a loop by pivoting joints. Each four-bar linkage forms a closed kinematic chain to receive force from the actuator 60. The four-bar linkage components include a fixed linkage that is couplable to the toolbar 12 of the work machine 11. Further, the remaining links follow the motion dictated by the linkage directly coupled to the actuator 60.

FIGS. 2A-2B show an example of the linkage assembly 202 coupled to the row unit 10. As described above, the linkage assembly 202 is provided to distribute force substantially evenly throughout a rotational range of the linkage assembly 202 and between the row unit 10 and/or a work machine 11 and/or tool bar 12.

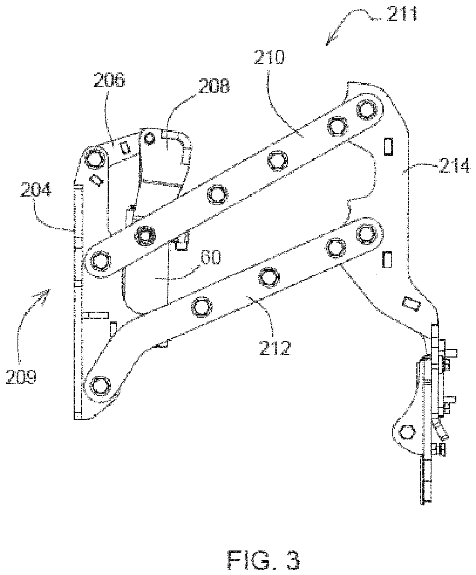

In the example shown in FIGS. 2A-4, the linkage assembly 202 includes a plurality of connectors. For example, the linkage assembly 202 includes a coupler 204, a top linkage 206, an actuator linkage 208 a first arm 210 a second arm 212 and a shank arm 214. In the example shown in FIGS. 2A-4, the linkage assembly 202 includes fasteners 217 that couple pluralities of the connectors. As shown in FIGS. 2A-4 each of the connectors are respectively coupled in pairs in the linkage assembly 202.

The linkage assembly may be described as including two portions. The portions of the linkage assembly 202 include an upper linkage assembly 209 that forms a four-bar linkage and an arm assembly 211 that forms a four-bar linkage. The four-bar linkages are configured such that the distance between at the actuator linkage 208 and the coupler 204 may be proportional to a distance between the coupler 204 and the shank arm 214 at a given extension length of the actuator 60.

The coupler 204 of the linkage assembly 202 is a rigid elongated body that is couplable to an external surface such as a planter assembly bar. The coupler 204 includes a plurality of pivot receivers 216 that extend therethrough. The pivot receivers 216 include circular receiver walls that define receiver openings. The pivot receivers 216 are configured to receive a fastener 217 such as a pivotable fastener (e.g., bolt pin, screw, etc.). In the example shown in FIGS. 2A-4 the coupler 204 includes three pivot receivers 216. The pivot receivers 216 are disposed in substantially vertical orientation with respect to the row unit 10 when in an operational orientation for a seeding operation. However, in other examples, the coupler 204 may include a different suitable number of pivot receivers (e.g., 1, 2, 4, 5, 6, etc.). In some examples, the pivot receivers 216 may be disposed in a non-substantially vertical orientation with respect to the row unit 10 (e.g., horizontally adjacent, or offset with respect to each other).

The top linkage 206 is a rigid elongated body that includes pivot receivers 218 that extend therethrough. The pivot receivers 218 are provided to couple the top linkage 206 to one or more other portions of the linkage assembly 202 such as the coupler 204. The top pivot receivers 218 include receiver walls that define receiver openings. In some examples the receiver openings are cylindrical openings that pass through the top linkage 206. The plurality of inner walls is configured to receive a fastener such as the fastener 217 (e.g., bolt, pin, screw, etc.). In the example shown in FIGS. 2A-2B, the top linkage 206 has a first end and a second end. The top linkage 206 includes pivot receivers respectively disposed about the first end and the second end. The openings are substantially axially aligned such that the centers of the pivot receiver at the first end and the pivot receiver at the second end each intersect with a central axis of the top linkage 206.

The first end of the top linkage 206 may be aligned with a top of the coupler 204 such that the pivot receiver 216 adjacent first end of the coupler 204 is concentrically aligned with the pivot receiver 218 disposed about the first end of the top linkage 206. The fastener 217 may be disposed therethrough. As such, the top linkage 206 and the coupler 204 are rotatable with respect to each other.

The actuator linkage 208 is a rigid body that includes a plurality of pivot receivers 220 and is configured to rotatably couple to the top linkage 206 and rotatably couple to the actuator 60. In the example shown in FIGS. 2A-4, the actuator linkage 208 has a first end and a second end. The actuator linkage 208 includes two axially aligned pivot receivers 220. The pivot receivers 220 include walls that define openings disposed about the first end. Each of the openings disposed about the first end are spaced apart from each other such that a portion of the top linkage 206 may be disposed therebetween.

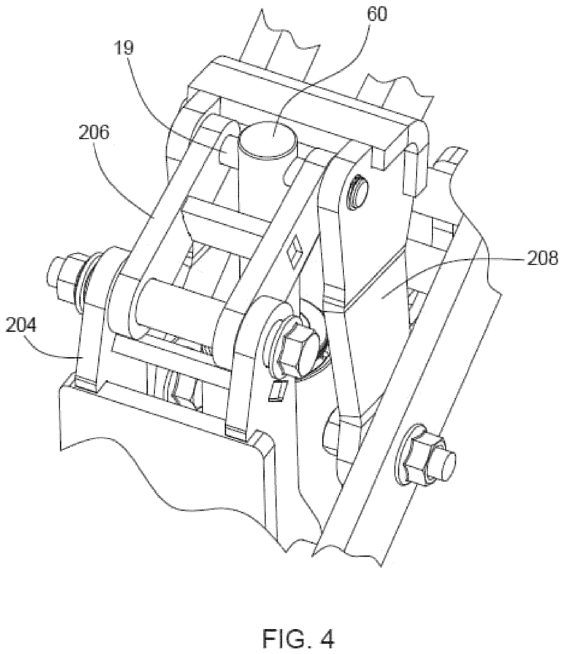

The first end of the actuator linkage 208 may be aligned with the second end of the top linkage 206 such that pivot receiver 218 disposed about the second end of the top linkage 206 is concentrically aligned with the pivot receivers 220 of the actuator linkage 208. A fastener 217 such as a pivotable fastener such as a bolt, pin, screw, etc., may be disposed therethrough. As such, the top linkage 206 and the actuator linkage 208 are rotatable with respect to each other. As such, the actuator linkage 208 and the actuator 60 may be coupled together by a uniform fastener with the first arm 210 (described in further detail below). The second end of the actuator linkage 208 may be aligned with the actuator 60 such that the actuator pivot receivers 220 are aligned with the actuator connector 19 and the actuator connector 19 may be rotatably coupled thereto. See FIG. 4.

The first arm 210 and the second arm 212 are each elongated rigid bodies that include a plurality of pivot receivers 222. Each of the first arm 210 and the second arm 212 have a first end and a second end. In the example shown in FIG. 2A-2B, the plurality of arm receivers 210, 212 are disposed between the first end and the second end of each of the first arm 210 and the second arm 212. Each of first and second arm 210, 212 include pivot receivers 222 disposed about the first end and the second end. The plurality of pivot receivers 222 include receiver walls that define receiver openings. In some examples the receiver openings are cylindrical openings that pass through the first arm 210 and the second arm 212 respectively. The plurality of inner walls is configured to receive a fastener such as the fastener 217 (e.g., bolts pins, screws, etc.). The first arm 210 is a substantially straight elongated member. The pivot receivers 222 are axially aligned along the first arm 210. The first arm 210 in the example shown in FIGS. 2A-2B includes six pivot receivers 222. The six pivot receivers 222 are spaced apart to provide structural support for the linkage assembly 202. In some examples, the pivot receivers 222 may be configured to be mechanical stoppers to limit the movement of the linkage assembly 202, by abutting other portions of the linkage assembly 202 at a desired range of motion limit. Although in the example shown in FIGS 2A-2B the fasteners 217 are couplable to the pivot receivers 222. In some examples, the fasteners may be non-couplable members welded to provide support for the linkages. In some examples, a plurality of the linkages may be cast as a uniform component such as a uniform elongated member, which may not include fasteners 217 or pivot receivers 222. In the example shown in FIGS 2A-4 the first arm has a length of about 522.2 mm, but the first arm 210 may have any length suitable to form a portion of a four-bar linkage. For example, the first arm 210 may have a length from about 50 to 1000 mm.

The first arm 210 forms a top bar of the arm assembly 211 and a portion of the first arm 210 forms a bottom bar of the upper linkage assembly 209. In some examples one of the pivot receivers 222 is concentrically aligned with the pivot receivers 220 about the second end of the actuator linkage 208 and the actuator connector 19, such that the first arm 210 is rotatable with respect to both the actuator linkage 208 and the actuator connector 19. As such, in some examples the actuator linkage 208, and the actuator 60 may be coupled together by a uniform fastener.

The second arm 212 includes a first portion that is substantially straight and a second portion is substantially straight and forms an angle greater than 90 deg. but less than 180 deg. with respect to the first portion. The second arm 212 in the example shown in FIG. 2A-2B includes six pivot receivers 222. The six pivot receivers 222 are spaced apart to provide adjustability options for coupling portions of the linkage assembly 202 for a desired travel of the row unit 10 coupled thereto with respect to the toolbar 12. The second arm 212 may have a length suitable to form a portion of a four-bar linkage. In the example shown in 2A-2B the second arm 212 has a length of about 522.2 mm. For example, the second arm 212 may have a length from about 50 to 1000 mm. The first portion may have a length suitable to form a portion of a four-bar linkage. In the example shown in FIG. 2A-2B the first portion has a length of 95 mm, but in some examples the first portion may have a length from up to about 1000 mm. In the example shown in FIG. 2A-2B the second portion has a length of about 440.5 mm, but in some examples the second portion may have any length suitable to form a portion of a four-bar linkage. For example, the second portion may have a length up to about 1000 mm. The pivot receiver 222 disposed about the first end of the second arm 212 is concentrically aligned with a bottom pivot receiver of the coupler 204 such that the second arm 212 is rotatable with respect to the coupler 204. As described above, in the example shown in FIGS. 2A-2B, the second arm 212 includes a first portion that is substantially straight and a second portion is substantially straight and forms an angle between each other. However, in some examples, the second arm 212 may be one substantially linear one.

The shank arm 214 is a rigid body that includes a plurality of row unit pivot receivers 220. The plurality of pivot receivers 220 include receiver walls that define receiver openings. In some examples the receiver openings are cylindrical openings that pass through the shank arm 214. The plurality of inner walls is configured to receive a fastener such as the fastener 217 (e.g., bolt, pin, screw, etc.). In the example shown in FIGS. 2A-2B, the shank arm 214 includes two pivot receivers 220. Two of the pivot receivers 220 are disposed in substantially vertical orientation with respect to the row planter assembly when in an operational orientation for a seeding operation. A coupling surface is provided and disposed vertically and horizontally offset from a line intersecting the center of the two pivot receivers 220 of the shank arm 214. In some examples, the coupler may include a different suitable number of pivot receivers (e.g., 1, 2, 4, 5, 6, etc.). In some examples, the pivot receivers 220 may also be disposed in a different orientation with respect to the planter assembly (e.g., all horizontally and/or vertically aligned).

The pivot receiver 220, about the second end of the second arm 212 is concentrically aligned with one or more of the pivot receivers 220 and between the pivot receiver 220 disposed about a first end and a row unit pivot receiver 220 disposed about a second end of the shank arm 214. The pivot receiver 220, which is disposed about the second end such that the second arm 212 is rotatable with respect to the shank arm 214. The pivot receiver 220, which is disposed about the second end of the shank arm 214 is axially aligned with a fastener 217 such that the pivot receiver 220 is rotatable with respect to the row unit 10.

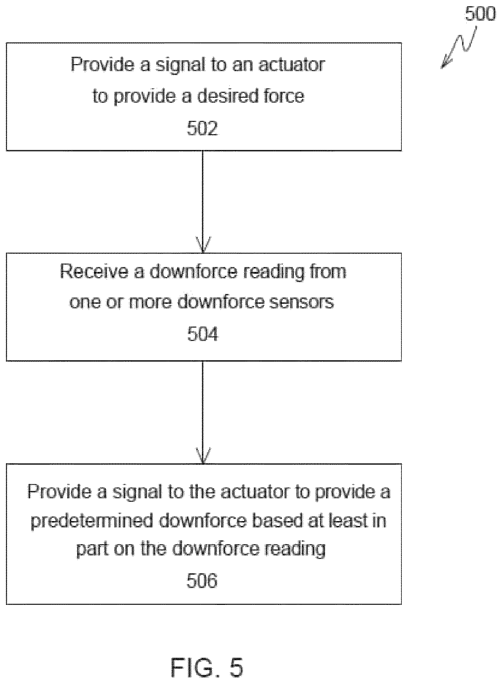

FIG. 5 is a flow chart 500 showing example steps 502-506 for controlling a downforce of a planting system through a linkage system. The process may be implemented by a system for monitoring a portion of the work machine 11, which may include one or more processors such as the controller and/or processor 104. The controller and/or processor 104 may be communicatively coupled to one or more components of the work machine such that the controller and/or processor may transmit and receive signals from one or more electronic and/or communication network components of the work machine.

At 502, the processor 104 provides instructions to the actuator 60 to provide a desired force. In some examples, the desired force may be based at least in part on an upward ground force that may act against the row unit 10. In some examples, the downforce is based on one or more other factors such as predetermined downforce values or measured downforce values. The downforce may be provided to provide suspension for the row unit 10 as the row unit 10 passes over one or more ground surfaces.

At 504 the processor 104 receives a downforce reading from a sensor coupled to the row unit 10 such as a pressure sensor (e.g., downforce sensor). In some examples, the sensor is configured to provide one or more signals such that a processor such as the controller 104 and/or processor 104 may determine force acting through a wheel of the row unit 10 at least in part based on the one or more signals. In some examples, the controller includes and/or is coupled to a pressure controller that is configured to determine and/or transmit instructions to determine and/or maintain a desired pressure in one or more components of the work machine (e.g., a row unit wheel, the actuator 60). In some examples, the sensor may be one or more sensors that may coordinate force values based at least in part on one or more wheel pressure readings and/or pressure readings from one or more other portions of the system. In some examples, the processor 104 may determine the one or more readings from the sensor based on one or more direct readings through a portion of the row unit 10 receiving normal force from the ground. In some examples, the processor may determine the reading based at least in part from a portion of the linkage assembly 202. In some examples, the received force may be calculated based at least in part on a calculated and/or determined force through the linkage assembly 202. This force may be predetermined and/or dynamically calculated.

At 506, the processor 104 may provide a signal to the actuator 60 to provide a predetermined downforce based at least in part on the downforce reading. In some examples, the downforce to be provided may be determined additionally or alternatively in real time based on determinations such as machine learning, or computational determinations. In some examples, the downforce is correlated by association in a predetermined local and/or remote memory. The determined and/or predetermined force from the actuator may be determined based at least in part on a calculated force as distributed through the linkage assembly 202. As described above, the linkage assembly 202 may be configured to distribute forces between the upper linkage assembly 209 and the arm assembly 211. As such, the force may be determined to provide a desired force as distributed through the linkage assembly.

### Boilerplate

As used herein, "e.g.," is utilized to non-exhaustively list examples and carries the same meaning as alternative illustrative phrases such as "including," "including, but not limited to," and "including without limitation." Unless otherwise limited or modified, lists with elements that are separated by conjunctive terms (e.g., "and") and that are also preceded by the phrase "one or more of" or "at least one of" indicate configurations or arrangements that potentially include individual elements of the list, or any combination thereof. For example, "at least one of A, B, and C" or "one or more of A, B, and C" indicates the possibilities of only A, only B, only C, or any combination of two or more of A, B, and C (e.g., A and B; B and C; A and C; or A, B, and C).

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described examples.

While the above describes examples of the present disclosure, these descriptions should not be viewed in a limiting sense. Rather, other variations and modifications may be made without departing from the scope and spirit of the present disclosure as defined in the appended claims.

The foregoing description and examples have been set forth merely to illustrate the disclosure and are not intended as being limiting. Each of the disclosed aspects and examples of the present disclosure may be considered individually or in combination with other aspects, embodiments, and variations of the disclosure. In addition, unless otherwise specified, none of the steps of the methods of the present disclosure are confined to any particular order of performance. Modifications of the disclosed examples incorporating the spirit and substance of the disclosure may occur to persons skilled in the art and such modifications are within the scope of the present disclosure. Furthermore, all references cited herein are incorporated by reference in their entirety. Terms of orientation used herein, such as "top," "bottom," "horizontal," "vertical," "longitudinal," "lateral," and "end" are used in the context of the illustrated example. However, the present disclosure should not be limited to the illustrated orientation. Indeed, other orientations are possible and are within the scope of this disclosure. Terms relating to circular shapes as used herein, such as diameter or radius, should be understood not to require perfect circular structures, but rather should be applied to any suitable structure with a cross-sectional region that can be measured from side-to-side. Terms relating to shapes generally, such as "circular" or "cylindrical" or "semi-circular" or "semi-cylindrical" or any related or similar terms, are not required to conform strictly to the mathematical definitions of circles or cylinders or other structures but can encompass structures that are reasonably close approximations.

Conditional language used herein, such as, among others, "can," "might," "may," "e.g.," and the like, unless specifically stated otherwise, or otherwise understood within the context as used, is generally intended to convey that some examples include, while other examples do not include, certain features, elements, and/or states. Thus, such conditional language is not generally intended to imply that features, elements, blocks, and/or states are in any way required for one or more examples or that one or more examples necessarily include logic for deciding, with or without author input or prompting, whether these features, elements and/or states are included or are to be performed in any particular example.

Conjunctive language, such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain examples require the presence of at least one of X, at least one of Y, and at least one of Z.

The terms "approximately," "about," and "substantially" as used herein represent an amount close to the stated amount that still performs a desired function or achieves a desired result. For example, in some examples, as the context may dictate, the terms "approximately", "about", and "substantially" may refer to an amount that is within less than or equal to 10% of the stated amount. The term "generally" as used herein represents a value, amount, or characteristic that predominantly includes or tends toward a particular value, amount, or characteristic. As an example, in certain examples, as the context may dictate, the term "generally parallel" can refer to something that departs from exactly parallel by less than or equal to 20 degrees. Unless otherwise explicitly stated, articles such as "a" or "an" should generally be interpreted to include one or more described items. Accordingly, phrases such as "a device configured to" are intended to include one or more recited devices. Such one or more recited devices can be collectively configured to carry out the stated recitations. For example, "a processor configured to carry out recitations A, B, and C" can include a first processor configured to carry out recitation A working in conjunction with a second processor configured to carry out recitations B and C.

The terms "comprising," "including," "having," and the like are synonymous and are used inclusively, in an open-ended fashion, and do not exclude additional elements, features, acts, operations, and so forth. Likewise, the terms "some," "certain," and the like are synonymous and are used in an open-ended fashion. Also, the term "or" is used in its inclusive sense (and not in its exclusive sense) so that when used, for example, to connect a list of elements, the term "or" means one, some, or all of the elements in the list.

Overall, the language of the claims is to be interpreted broadly based on the language employed in the claims. The language of the claims is not to be limited to the non-exclusive examples and examples that are illustrated and described in this disclosure, or that are discussed during the prosecution of the application.

Although systems and methods for a suspension system for a planting machine have been disclosed in the context of certain examples and examples, this disclosure extends beyond the specifically disclosed examples to other alternative examples and/or uses of the examples and certain modifications and equivalents thereof. Various features and aspects of the disclosed examples can be combined with or substituted for one another in order to form varying modes of systems and methods for a suspension system for a planting machine. The scope of this disclosure should not be limited by the particular disclosed examples described herein.

Certain features that are described in this disclosure in the context of separate implementations can be implemented in combination in a single implementation. Conversely, various features that are described in the context of a single implementation can be implemented in multiple implementations separately or in any suitable subcombination. Although features may be described herein as acting in certain combinations, one or more features from a claimed combination can, in some cases, be excised from the combination, and the combination may be claimed as any subcombination or variation of any subcombination.

While the methods and devices described herein may be susceptible to various modifications and alternative forms, specific examples thereof have been shown in the drawings and are herein described in detail. It should be understood, however, that the invention is not to be limited to the particular forms or methods disclosed, but, to the contrary, the invention is to cover all modifications, equivalents, and alternatives falling within the spirit and scope of the various examples described and the appended claims. Further, the disclosure herein of any particular feature, aspect, method, property, characteristic, quality, attribute, element, or the like in connection with an example can be used in all other examples set forth herein. Any methods disclosed herein need not be performed in the order recited. Depending on the example, one or more acts, events, or functions of any of the algorithms, methods, or processes described herein can be performed in a different sequence, can be added, merged, or left out altogether (e.g., not all described acts or events are necessary for the practice of the algorithm). In some examples, acts or events can be performed concurrently, e.g., through multi-threaded processing, interrupt processing, or multiple processors or processor cores or on other parallel architectures, rather than sequentially. Further, no element, feature, block, or step, or group of elements, features, blocks, or steps, are necessary or indispensable to each example. Additionally, all possible combinations, subcombinations, and rearrangements of systems, methods, features, elements, modules, blocks, and so forth are within the scope of this disclosure. The use of sequential, or time-ordered language, such as "then," "next," "after," "subsequently," and the like, unless specifically stated otherwise, or otherwise understood within the context as used, is generally intended to facilitate the flow of the text and is not intended to limit the sequence of operations performed. Thus, some examples may be performed using the sequence of operations described herein, while other examples may be performed following a different sequence of operations.

Moreover, while operations may be depicted in the drawings or described in the specification in a particular order, such operations need not be performed in the particular order shown or in sequential order, and all operations need not be performed, to achieve the desirable results. Other operations that are not depicted or described can be incorporated in the example methods and processes. For example, one or more additional operations can be performed before, after, simultaneously, or between any of the described operations. Further, the operations may be rearranged or reordered in other implementations. Also, the separation of various system components in the implementations described herein should not be understood as requiring such separation in all implementations, and it should be understood that the described components and systems can generally be integrated together in a single product or packaged into multiple products. Additionally, other implementations are within the scope of this disclosure.

Some examples have been described in connection with the accompanying figures. Certain figures are drawn and/or shown to scale, but such scale should not be limiting, since dimensions and proportions other than what are shown are contemplated and are within the scope of the examples disclosed herein. Distances, angles, etc. are merely illustrative and do not necessarily bear an exact relationship to actual dimensions and layout of the devices illustrated. Components can be added, removed, and/or rearranged. Further, the disclosure herein of any particular feature, aspect, method, property, characteristic, quality, attribute, element, or the like in connection with various examples can be used in all other examples set forth herein. Additionally, any methods described herein may be practiced using any device suitable for performing the recited steps.

The methods disclosed herein may include certain actions taken by a practitioner; however, the methods can also include any third-party instruction of those actions, either expressly or by implication. For example, actions such as "positioning an electrode" include "instructing positioning of an electrode."

The ranges disclosed herein also encompass any and all overlap, subranges, and combinations thereof. Language such as "up to," "at least," "greater than," "less than," "between," and the like includes the number recited. Numbers preceded by a term such as "about" or "approximately" include the recited numbers and should be interpreted based on the circumstances (e.g., as accurate as reasonably possible under the circumstances, for example ±5%, ±10%, ±15%, etc.). For example, "about 1 V" includes "1 V." Phrases preceded by a term such as "substantially" include the recited phrase and should be interpreted based on the circumstances (e.g., as much as reasonably possible under the circumstances). For example, "substantially perpendicular" includes "perpendicular." Unless stated otherwise, all measurements are at standard conditions including temperature and pressure.

In summary, various examples and examples of systems and methods for a suspension system for a planting machine has been disclosed. Although the systems and methods for seed firming have been disclosed in the context of those examples and examples, this disclosure extends beyond the specifically disclosed examples to other alternative examples and/or other uses of the examples, as well as to certain modifications and equivalents thereof. This disclosure expressly contemplates that various features and aspects of the disclosed examples can be combined with, or substituted for, one another. Thus, the scope of this disclosure should not be limited by the particular disclosed examples described herein but should be determined only by a fair reading of the claims that follow.

## Claims

1. A suspension system (201) for a planting machine, the suspension system (201) comprising:
an actuator (60) configured to be couplable to a rigid frame;
an upper linkage assembly (209)
rotatably coupled to the actuator (60) and comprising a plurality of arms and a bracket; and
an arm assembly (211) comprising a plurality of arms rotatably coupled to the upper linkage assembly (209) and the actuator (60) and a shank arm (214) rotatably coupled to the plurality of arms,
wherein shank arm (214) is configured to be rotatably couplable to a row unit (10) and bracket is configured to be rigidly couplable to the rigid frame,
wherein the upper linkage assembly (209) is configured to distribute forces between the upper linkage assembly (209) and the arm assembly, and
wherein the upper linkage assembly (209) is configured to distribute a force over a greater rotational range than the arm assembly.

2. The suspension system (201) of claim 1, wherein the upper linkage assembly (209) is a four-bar linkage.

3. The suspension system (201) of claim 1 or 2, wherein the arm assembly is a four-bar linkage.

4. The suspension system (201) of one of the claims 1 to 3, wherein the arm assembly and the upper linkage assembly (209) comprise two interconnected four-bar linkages.

5. The suspension system (201) of one of the claims 1 to 4, wherein the suspension system (201) is configured to cause a distance between at least a portion of the bracket and one or more other linkages of the upper linkage assembly (209) to increase and decrease proportionally with a distance between the bracket and the shank arm (214).

6. The suspension system (201) of one of the claims 1 to 5, wherein the actuator (60) is an electro-hydraulic cylinder.

7. The suspension system (201) of one of the claims 1 to 6, wherein row unit (10) is a seeding row unit (10) that further comprises one or more ground openers comprising a tension system, wherein the upper linkage assembly (209), and the arm assembly are configured to regulate a distributed force in the tension system of the one or more ground openers.

8. The suspension system (201) of one of the claims 1 to 7, wherein the upper linkage assembly (209) and the arm assembly are configured to be couplable to a uniform row unit toolbar.

9. A system for a planting machine, the system comprising:
a row unit toolbar;
one or more row units (10);
one or more suspension systems (201) according to one of the claims 1 to 8 coupled to and extending between the row unit toolbar and the one or more planting machine components.

10. The system of claim 9, wherein the bracket is rigidly coupled to the toolbar.

11. The system of claim 9 or 10, wherein the system is configured to cause a distance between at least a portion of the bracket and one or more other linkages of the upper linkage assembly (209) to increase and decrease proportionally with a distance between the shank arm (214) and the bracket.

12. The system of one of the claims 9 to 11, wherein the row unit (10) is a seeding row unit (10) that further comprises one or more ground openers comprising a tension system, wherein the upper linkage assembly (209), and the arm assembly are configured to regulate a distributed force in the tension system of the one or more ground openers.

13. The system of of one of the claims 9 to 12, further comprising a pressure controller communicatively coupled to the actuator (60) and the tension system, and wherein the pressure controller is configured to coordinate pressure in the actuator (60) and the tension system.

14. A method for adjusting downforce of a planting machine row unit suspension system (201), the method comprising a system according to one of the claims 9 to 13, the method further comprising:
providing instructions to the actuator (60) to provide a desired force;
receiving a downforce reading from one or more downforce sensors; and
providing a signal to the actuator (60) to provide a predetermined downforce based at least in part on the downforce reading,
wherein the force from the actuator (60) is provided through a linkage assembly and the downforce is measured from a portion of the linkage assembly, and
wherein the linkage assembly is configured to distribute forces between an upper linkage assembly (209) and an arm assembly.
